# EUROPÄISCHE PATENTSCHRIFT

(11) **EP 3 995 749 B1**
(45) Veröffentlichungstag und Bekanntmachung des Hinweises auf die Patenterteilung: **21.02.2024**
(21) Anmeldenummer: 20206097.6
(22) Anmeldetag: 06.11.2020
(51) Int. Cl.: F24F 13/02, F24F 13/08, F24F 13/32, F24F 12/00, F16L 43/00

(54) **LÜFTUNGSGERÄT-LUFTLEITUNGSBAUTEIL**
VENTILATION UNIT AIR LINE COMPONENT
COMPOSANT D'UNE CONDUITE D'AIR DE L'UNITÉ DE VENTILATION

(43) Veröffentlichungstag der Anmeldung: 11.05.2022
(73) Patentinhaber: Hoval Aktiengesellschaft, 9490 Vaduz (LI)
(72) Erfinder: MERHAR, Thomas, 9494 Schaan (LI); BENVENUTI, Thomas, 6971 Hard (AT); GABATHULER, Ronny, 9467 Frümsen (CH)
(74) Vertreter: Zenz Patentanwälte Partnerschaft mbB

(56) Entgegenhaltungen:
- EP-A1- 2 840 325
- EP-A1- 3 543 622
- FR-A1- 2 965 334
- US-A1- 2008 229 800

## Beschreibung

Die Erfindung ist auf ein Lüftungsgerät-Luftleitungsbauteil gerichtet, welches einen Grundkörper mit einer Vielzahl von Seitenflächen aufweist, welche einen Innenraum des Grundkörpers begrenzen. Auf einer ersten Seitenfläche des Grundkörpers ist eine Geräteanschlussöffnung ausgebildet, wobei auf einer zweiten Seitenfläche des Grundkörpers eine Anschlussöffnung ausgebildet ist. Die Geräteanschlussöffnung ist über den Innenraum mit der Anschlussöffnung strömungsverbunden.

Ebenso ist die Erfindung auf ein Raumlüftungssystem mit einem Lüftungsgerät gerichtet, wobei das Lüftungsgerät ein Gerätegehäuse aufweist, in welchem wenigstens ein Filterelement, wenigstens ein Wärme-Rückgewinner und wenigstens eine Ventilatoren-Einheit untergebracht sind.

Bekanntermaßen werden im Bereich der Wohnraumlüftung sogenannte Raumlüftungssysteme verwendet, welche jeweils ein Lüftungsgerät aufweisen. Das Lüftungsgerät übernimmt dabei die kontinuierliche Frischluftversorgung der Wohnräume, welche rund um die Uhr und ganz ohne Zugluft mit frischer, sauerstoffreicher Luft versorgt werden. Verbrauchte Luft und Gerüche werden über das Lüftungsgerät über die Abluft weggeführt. Wertvolle Heizwärme, die beim Lüften mit Fenstern verloren gehen würde, bleibt durch eine in dem Lüftungsgerät integrierte Wärmerückgewinnung im Gebäude. Durch Filterelemente werden Schmutzpartikel, Staub und Pollen ausgefiltert. Die Platzverhältnisse rund um das Lüftungsgerät sind meist beengt. Dies erfordert unter anderem auch eine hohe Variabilität der Anbauteile, damit eine Einbaulösung gefunden werden kann. Zudem muss oft auf kleinem Raum die zu dem Lüftungsgerät hingeführt und/oder von dem Lüftungsgerät weggeführte Luft um 90° oder mehr umgelenkt werden. Ferner ist es bekannt, dass bei den Lüftungsgeräten auf dem Markt zwei unterschiedliche Bauformen existieren. Bei der ersten Bauform sind alle Luftanschlüsse (Außenluft, Fortluft, Zuluft, Abluft) auf einer Seite des Lüftungsgerätes angeordnet, wohingegen bei der zweiten Bauform die "kalten" Anschlüsse (Außenluft, Fortluft) auf der einen Seite des Lüftungsgerätes und die "warmen" Anschlüsse (Zuluft, Abluft) auf der anderen Seite des Lüftungsgerätes angeordnet sind. Für solche Lüftungsgeräte sind aus dem Stand der Technik quaderförmige Lüftungsgerät-Luftleitungsbauteile bekannt, wobei ein solches Lüftungsgerät-Luftleitungsbauteil beispielsweise auf die Oberseite eines Lüftungsgerätes aufgesetzt angeordnet ist und dort mit entsprechenden Luftanschlüssen verbunden ist. Zur Führung der verschiedenen Luftarten sind in einem solchen quaderförmigen Lüftungsgerät-Luftleitungsbauteile Luftkanäle ausgebildet, deren Anzahl der an das Lüftungsgerät-Luftleitungsbauteil angeschlossenen Luftanschlüsse (Außenluft, Fortluft, Zuluft, Abluft) des Lüftungsgerätes entspricht. Dabei sind meist solche quaderförmigen Lüftungsgerät-Luftleitungsbauteile meist als Schalldämpfer und lediglich für ein bestimmtes Lüftungsgerät ausgebildet, da die Anordnung der Luftanschlüsse (Außenluft, Fortluft, Zuluft, Abluft) an einem Lüftungsgerät nicht nur von Hersteller zu Hersteller, sondern auch für verschiedene Lüftungsgeräte eines Herstellers variiert. Es ist ersichtlich, dass die Führung der verschiedenen Luftarten (Außenluft, Fortluft, Zuluft, Abluft) direkt an dem Lüftungsgerät eine große Herausforderung an die Planung des Einbauorts hinsichtlich eines minimalen Raumbedarfs stellt.

Aus der FR 2 965 334 A1 ist ein Luftverteiler bekannt, welcher aus einem modular aufgebauten Grundkörper mit zwei Teilkörpern besteht. An den Seitenflächen des Grundkörpers sind mehrere Anschlussöffnungen ausgebildet. Für die Teilkörper kommen verschiedene Schnittebenen in Frage, wodurch identische Module mit einer einzigen Form hergestellt werden können. Aufgrund der vorgegebenen Öffnungen ist die relative Anordnung der beiden Teilkörper damit immer vorgegeben, so dass die beiden Teilkörper immer in einer einzigen vorgegebenen Befestigungsposition miteinander verbunden werden.

Der Erfindung liegt die Aufgabe zugrunde eine Lösung zu schaffen, die auf konstruktiv einfache Weise ein verbessertes Lüftungsgerät-Luftleitungsbauteil bereitstellt, welches sich durch eine hohe Flexibilität hinsichtlich der Anordnung der Luftanschlüsse eines Lüftungsgerätes und durch einen minimalen Raumbedarf auszeichnet.

Diese Aufgabe wird erfindungsgemäß gelöst durch ein Lüftungsgerät-Luftleitungsbauteil mit den Merkmalen gemäß dem Patentanspruch 1.

Das erfindungsgemäße Lüftungsgerät-Luftleitungsbauteil weist einen Grundkörper mit einer Vielzahl von Seitenflächen auf, welche einen Innenraum des Grundkörpers begrenzen. Auf einer ersten Seitenfläche des Grundkörpers ist eine Geräteanschlussöffnung ausgebildet. Ferner ist auf einer zweiten Seitenfläche des Grundkörpers eine Anschlussöffnung ausgebildet, wobei die Geräteanschlussöffnung über den Innenraum mit der Anschlussöffnung strömungsverbunden ist. Der Grundkörper weist einen ersten Teilkörper, an welchem die Geräteanschlussöffnung ausgebildet ist, und einen zweiten Teilkörper, an welchem die Anschlussöffnung ausgebildet ist, auf. Dabei ist der zweite Teilkörper entweder in einer ersten Befestigungsposition, in welcher die zweite Seitenfläche an die erste Seitenfläche angrenzend angeordnet ist, oder in einer zweiten Befestigungsposition, in welcher die zweite Seitenfläche der ersten Seitenfläche gegenüberliegend angeordnet ist, mit dem ersten Teilkörper verbunden.

Ebenso wird die der Erfindung zugrunde liegende Aufgabe durch ein Raumlüftungssystem mit den Merkmalen gemäß dem Patentanspruch 14 gelöst.

Das erfindungsgemäße Raumlüftungssystem weist ein Lüftungsgerät und wenigstens zwei Lüftungsgerät-Luftleitungsbauteile auf. Das Lüftungsgerät weist dabei ein Gerätegehäuse auf, in welchem wenigstens ein Filterelement, wenigstens ein Wärme-Rückgewinner und wenigstens eine Ventilatoren-Einheit untergebracht sind, wobei das Gerätegehäuse wenigstens eine Gerätekopplungsseite mit wenigstens zwei Kopplungsanschlüssen aufweist. Ein jeweiliger Kopplungsanschluss ist mit der Geräteanschlussöffnung strömungsverbunden.

Vorteilhafte und zweckmäßige Ausgestaltungen und Weiterbildungen der Erfindung ergeben sich aus den entsprechenden Unteransprüchen.

Durch die Erfindung werden ein Lüftungsgerät-Luftleitungsbauteil und ein Raumlüftungssystem mit einem solchen Lüftungsgerät-Luftleitungsbauteil zur Verfügung gestellt, die sich durch eine einfache Konstruktion auszeichnen. Dadurch, dass der Grundkörper einen ersten Teilkörper und einen zweiten Teilkörper umfasst und dass der zweite Teilkörper in der ersten Befestigungsposition oder in der zweiten Befestigungsposition an dem ersten Teilkörper befestigt wird, kann je nach Anordnung des zweiten Teilkörpers zu dem ersten Teilkörper eine im Wesentlichen geradlinige Luftführung oder eine im Wesentlichen um 90° gebogene Luftführung durch das Lüftungsgerät-Luftleitungsbauteil realisiert werden. Somit kann bei einem Lüftungsgerät mit insgesamt vier Luftanschlüssen für die Außenluft, die Fortluft, die Zuluft und die Abluft für jeden Luftanschluss mit einem jeweiligen Lüftungsgerät-Luftleitungsbauteil die Luftführung individuell definiert und festgelegt werden, wie diese von dem Lüftungsgerät fortgeführt oder zu dem Lüftungsgerät hingeführt werden soll, wobei bei vier Luftanschlüssen bzw. Kopplungsanschlüssen des Lüftungsgerätes dementsprechend vier Lüftungsgerät-Luftleitungsbauteile vorzusehen sind. Dementsprechend kann durch die Verwendung der erfindungsgemäßen Lüftungsgerät-Luftleitungsbauteile eine raumsparende Anordnung des Lüftungsgerätes realisiert werden.

Die Erfindung sieht in Ausgestaltung des Lüftungsgerät-Luftleitungsbauteils vor, dass der Grundkörper die Form eines extrudierten Vierecks aufweist. Insbesondere kann in Ausgestaltung des erfindungsgemäßen Lüftungsgerät-Luftleitungsbauteils der Grundkörper die Form eines Quaders aufweisen. Somit können je nach Bauart des Lüftungsgerätes zwei oder vier Lüftungsgerät-Luftleitungsbauteile auf einer Seite des Lüftungsgerätes verwendet und nebeneinanderliegend angeordnet werden, wodurch der optische Eindruck eines einzigen Aufsatzes entsteht, was den ästhetischen Eindruck des Lüftungsgerätes mit den Lüftungsgerät-Luftleitungsbauteilen deutlich erhöht.

Vorzugsweise sind in weiterer Ausgestaltung der Erfindung die Geräteanschlussöffnung und die erste Anschlussöffnung unter einem Winkel von 90° zueinander angeordnet, wenn der zweite Teilkörper in der ersten Befestigungsposition angeordnet ist. Alternativ ist für die Anschlussöffnung auch eine davon abweichende Anordnung um 25° in beide Richtungen denkbar, so dass die Geräteanschlussöffnung und die Anschlussöffnung unter einem Winkel im Bereich zwischen 55° und 115° zueinander angeordnet sind.

Ebenso sind vorzugsweise die Geräteanschlussöffnung und die Anschlussöffnung unter einem Winkel von 180° zueinander angeordnet, wenn der zweite Teilkörper in der zweiten Befestigungsposition angeordnet ist. Dabei ist ebenso eine davon abweichende Anordnung um 25° in beide Richtungen denkbar, so dass die Geräteanschlussöffnung und die Anschlussöffnung unter einem Winkel im Bereich zwischen 155° und 205° zueinander angeordnet sind.

Eine Möglichkeit zur Realisierung der unterschiedlichen Anordnungen der Anschlussöffnung zu der Geräteanschlussöffnung besteht in Ausgestaltung der Erfindung darin, dass der erste Teilkörper und der zweite Teilkörper jeweils mit zwei dreieckförmigen und parallel zueinander verlaufenden Teilseitenflächen ausgebildet sind. Somit weist ein jeweiliger Teilkörper im Querschnitt bzw. in Seitenansicht eine dreieckförmige Gestalt auf, wobei es sich vorzugsweise um ein rechtwinkliges Dreieck handelt.

Der erste Teilkörper und der zweite Teilkörper sind miteinander verbunden, wobei der zweite Teilkörper entweder in der ersten oder zweiten Befestigungsposition angeordnet ist. Die Verbindung des ersten Teilkörpers mit dem zweiten Teilkörper kann dabei beispielsweise lösbar ausgebildete sein. Denkbar ist aber auch eine nicht lösbare Verbindung, bei welcher zum Beispiel der erste Teilkörper mit dem zweiten Teilkörper verklebt wird. Vor dem Verbinden muss grundsätzlich eine Entscheidung darüber getroffen werden, wie die Luft innerhalb des Grundkörpers geführt werden soll. Unabhängig davon, ob eine lösbare oder nicht lösbare Verbindung ausgebildet werden soll, kann diese Entscheidung beispielsweise sehr spät am Einbauort, also einer Baustelle, oder sehr früh bei Serienfertigung im Werk getroffen werden.

Zur Befestigung des ersten Teilkörpers mit dem zweiten Teilkörper und für eine genau definierte Positionierung des ersten Teilkörpers zu dem zweiten Teilkörper sieht die Erfindung in einer weiteren Ausgestaltung für das Lüftungsgerät-Luftleitungsbauteil vor, dass von einem an dem zweiten Teilkörper anliegenden Rand des ersten Teilkörpers wenigstens ein Verbindungssteg hervorsteht, welcher mit wenigstens einer Verbindungsaufnahme in der ersten und zweiten Befestigungsposition in Eingriff steht und den ersten Teilkörper mit dem zweiten Teilkörper verbindet, wobei die wenigstens eine Verbindungsaufnahme an einem an dem ersten Teilkörper anliegenden Rand des zweiten Teilkörpers ausgebildet ist.

Zur Minimierung oder zur Reduzierung von unerwünschten Geräuschen durch die durch das Lüftungsgerät-Luftleitungsbauteil geleitete Luft ist in einer weiteren Ausgestaltung vorgesehen, dass ein die Geräteanschlussöffnung mit der Anschlussöffnung strömungsverbindend ausgebildetes Schalldämmungs-Element innerhalb des Innenraumes des Grundkörpers eingesetzt angeordnet ist. Das Schalldämmungs-Element bildet dabei den eigentlichen Kanal zur Führung der Luft durch das Lüftungsgerät-Luftleitungsbauteil aus.

In Ausgestaltung des Lüftungsgerät-Luftleitungsbauteils ist ferner vorgesehen, dass an mindestens einer Seitenfläche des Grundkörpers, welche an die die Geräteanschlussöffnung aufweisende Seitenfläche angrenzt, mindestens eine zur lösbaren Verbindung mit einem Verbindungsbolzen ausgebildete Aufnahmeausnehmung ausgebildet ist. Auf diese Weise können zum Beispiel zwei nebeneinander liegend angeordnete Lüftungsgerät-Luftleitungsbauteile miteinander verbunden werden, was die Stabilität der Anordnung spürbar erhöht. Ebenso ist es denkbar, dass statt einer Verbindung mit einem benachbarten Lüftungsgerät-Luftleitungsbauteil eine Abdeckplatte an der Seitenfläche des Lüftungsgerät-Luftleitungsbauteils, welche die Verbindungsbolzen aufweist, lösbar befestigt ist, wobei die Abdeckplatte dann entsprechende Aufnahmeausnehmungen für die Bolzen aufweist und bündig mit dem Lüftungsgerät angeordnet werden kann. Auf diese Weise kann die optische Erscheinung von Lüftungsgerät und Lüftungsgerät-Luftleitungsbauteilen erhöht werden, wobei dabei ein optischer Eindruck erzeugt werden kann, dass Lüftungsgerät und Lüftungsgerät-Luftleitungsbauteile ein gemeinsames Bauteil darstellen.

Vorteilhaft ist es dabei in weiterer Ausgestaltung der Erfindung, wenn an einer Seitenfläche des Grundkörpers, welche der Geräteanschlussöffnung gegenüberliegt, mehrere Standfüße befestigt sind. Damit kann in vorteilhafter Weise das Lüftungsgerät-Luftleitungsbauteil auch als Sockel verwendet werden, um das Lüftungsgerät zu tragen bzw. abzustützen. Die Befestigung der Standfüße kann dabei entweder als feste Verbindung ausgeführt sein, bei welcher sich die Standfüße nach Befestigung nicht mehr ohne Beschädigung des Lüftungsgerät-Luftleitungsbauteils von diesem lösen lassen. Es ist aber auch denkbar, dass eine lösbare Verbindung vorgesehen ist.

Zur weiteren Erhöhung der Flexibilität, damit die Standfüße auch bei Bedarf auch wieder entfernt werden können, sieht die Erfindung in weiterer Ausgestaltung vor, dass ein jeweiliger Standfuß über ein in der Seitenfläche des Grundkörpers, welche der Seitenfläche der Geräteanschlussöffnung gegenüberliegt, eingeschweißtes Einlegeteil an der zweiten Seitenfläche lösbar befestigt ist. Dabei kann das Einlegeteil beispielsweise ein Gewindeelement sein, in welches ein Standfuß eingeschraubt ist. Ein solches als Gewindeelement ausgebildetes Einlegeteil dient zum Ausgleich von Bodenunebenheiten und bewirkt eine gleichmäßige Lastverteilung auf die einzelnen Standfüße.

Vorteilhaft ist es dabei in weiterer Ausgestaltung der Erfindung, wenn der Grundkörper aus einem dampfdiffusionsdichten und/oder wärmeisolierenden Werkstoff besteht. Als geeigneter Werkstoff ist es dabei denkbar, dass der Grundkörper aus einem thermoplastischen Kunststoff besteht. Beispielsweise kann für den Grundkörper expandiertes Polypropylen (EPP) verwendet werden.

Gemäß einer Ausgestaltung für das Raumlüftungssystem sieht die Erfindung vor, dass ein jeweiliges Lüftungsgerät-Luftleitungsbauteil um eine Achse, die durch den mit dem Lüftungsgerät verbundenen Kopplungsanschluss verläuft, relativ verdrehbar ausgebildet ist. Sofern der Grundkörper dabei die Form eines extrudierten Vierecks und/oder eines Quaders aufweist, sind damit Anordnungen bzw. Drehungen des Lüftungsgerät-Luftleitungsbauteils von 0°, 90°, 180°, 270° und 360° um die durch den mit dem Lüftungsgerät verbundenen Kopplungsanschluss verlaufende Achse möglich.

In weiterer Ausgestaltung des Raumlüftungssystems ist dann vorgesehen, dass eine Geräteanschlussöffnung des Lüftungsgerät-Luftleitungsbauteils und ein zugeordneter Kopplungsanschluss des Lüftungsgerätes oder eine Geräteanschlussöffnung eines ersten Lüftungsgerät-Luftleitungsbauteils und eine Geräteanschlussöffnung eines zweiten Lüftungsgerät-Luftleitungsbauteils zusammensteckbar ausgebildet sind. Die Zusammensteckbarkeit erleichtert den Zusammenbau des Raumlüftungssystems und ermöglicht darüber hinaus auch die Verwendung von mehreren Lüftungsgerät-Luftleitungsbauteilen, die miteinander verbunden werden können, um beispielsweise eine um 180° umgelenkte Luftführung zu ermöglichen.

Die Erfindung sieht in weiterer Ausgestaltung des Raumlüftungssystems vor, dass an der zweiten Seitenfläche eines jeweiligen Lüftungsgerät-Luftleitungsbauteils mehrere Standfüße befestigt sind und die wenigstens zwei Lüftungsgerät-Luftleitungsbauteile als das Lüftungsgerät tragende und abstützende Sockel ausgebildet sind. Die Befestigung kann dabei entweder als feste Verbindung ausgeführt sein, bei welcher sich die Standfüße nach Befestigung nicht mehr ohne Beschädigung des Lüftungsgerät-Luftleitungsbauteils von diesem lösen lassen. Es ist aber auch denkbar, dass eine lösbare Verbindung vorgesehen ist.

Schließlich ist es in weiterer Ausgestaltung der Erfindung von Vorteil, wenn ein jeweiliger Standfuß über ein in der Seitenfläche des Grundkörpers, welche der Seitenfläche der Geräteanschlussöffnung gegenüberliegt, eingeschweißtes Einlegeteil an der zweiten Seitenfläche lösbar befestigt ist. Das Einlegeteil kann zum Beispiel als ein Gewindeelement ausgebildet sein, in welches ein Stanfuß eingeschraubt ist. Ein solches als Gewindeelement ausgebildetes Einlegeteil bewirkt, dass die Standfüße höhenverstellbar angebracht sind, und sorgt für einen Ausgleich von Bodenunebenheiten und eine gleichmäßige Lastverteilung auf die einzelnen Standfüße.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der ein beispielhaftes und bevorzugtes Ausführungsbeispiel der Erfindung dargestellt ist.

In der Zeichnung zeigt:
Figur 1 eine perspektivische Ansicht auf ein bekanntes Lüftungsgerät gemäß einer ersten Bauart,
Figur 2 eine Perspektivansicht auf ein Raumlüftungssystem mit dem in Figur 1 gezeigten Lüftungsgerät und mehreren erfindungsgemäßen Lüftungsgerät-Luftleitungsbauteilen,
Figur 3 eine perspektivische Ansicht auf ein bekanntes Lüftungsgerät gemäß einer zweiten Bauart,
Figur 4 eine Perspektivansicht auf ein Raumlüftungssystem mit dem in Figur 3 gezeigten Lüftungsgerät und mehreren erfindungsgemäßen Lüftungsgerät-Luftleitungsbauteilen,
Figur 5 eine perspektivische Draufsicht auf ein Lüftungsgerät-Luftleitungsbauteil gemäß der Erfindung,
Figur 6 eine perspektivische Ansicht auf einen Grundkörper des erfindungsgemäßen Lüftungsgerät-Luftleitungsbauteils, wobei der Grundkörper einen ersten Teilkörper und einen zweiten Teilkörper umfasst,
Figur 7 eine perspektivische Einzelteildarstellung des erfindungsgemäßen Lüftungsgerät-Luftleitungsbauteils,
Figur 8 eine Perspektivansicht auf ein Schalldämmungs-Element für das Lüftungsgerät-Luftleitungsbauteil,
Figur 9a eine perspektivische Darstellung des erfindungsgemäßen Lüftungsgerät-Luftleitungsbauteils, bei welchem der zweite Teilkörper in einer ersten Befestigungsposition angeordnet ist,
Figur 9b eine weitere perspektivische Darstellung des erfindungsgemäßen Lüftungsgerät-Luftleitungsbauteils, bei welchem der zweite Teilkörper in der ersten Befestigungsposition angeordnet ist,
Figur 9c eine perspektivische Schnittdarstellung des erfindungsgemäßen Lüftungsgerät-Luftleitungsbauteils, bei welchem der zweite Teilkörper in der ersten Befestigungsposition angeordnet ist,
Figur 9d eine perspektivische Schnittdarstellung des erfindungsgemäßen Lüftungsgerät-Luftleitungsbauteils, bei welchem der zweite Teilkörper in der ersten Befestigungsposition angeordnet ist und bei welchem ein Schalldämmungs-Element innerhalb des Lüftungsgerät-Luftleitungsbauteils angeordnet ist,
Figur 10a eine perspektivische Darstellung des erfindungsgemäßen Lüftungsgerät-Luftleitungsbauteils, bei welchem der zweite Teilkörper in einer zweiten Befestigungsposition angeordnet ist,
Figur 10b eine weitere perspektivische Darstellung des erfindungsgemäßen Lüftungsgerät-Luftleitungsbauteils, bei welchem der zweite Teilkörper in der zweiten Befestigungsposition angeordnet ist,
Figur 10c eine perspektivische Schnittdarstellung des erfindungsgemäßen Lüftungsgerät-Luftleitungsbauteils, bei welchem der zweite Teilkörper in der zweiten Befestigungsposition angeordnet ist,
Figur 10d eine perspektivische Schnittdarstellung des erfindungsgemäßen Lüftungsgerät-Luftleitungsbauteils, bei welchem der zweite Teilkörper in der zweiten Befestigungsposition angeordnet ist und bei welchem ein Schalldämmungs-Element innerhalb des Lüftungsgerät-Luftleitungsbauteils angeordnet ist,
Figur 11a eine perspektivische Ansicht auf ein Lüftungsgerät-Luftleitungsbauteil mit auf einer Seitenfläche befestigten Standfüßen, und
Figur 11b eine Seitenansicht auf das Lüftungsgerät-Luftleitungsbauteil aus Figur 11a.

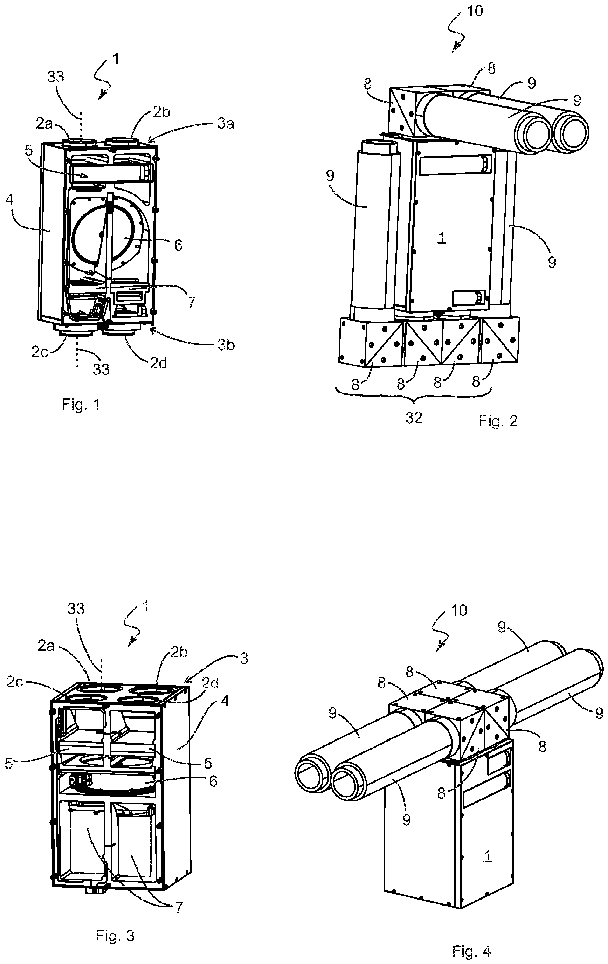

Die Figuren 1 und 3 zeigen unterschiedliche Bauformen für ein Lüftungsgerät 1, wobei in diesen Figuren die jeweiligen Frontabdeckungen des Lüftungsgerätes 1 entfernt sind, um einen Einblick in das Innere des Lüftungsgerätes 1 zu geben. Bei der in Figur 1 gezeigten Bauform des Lüftungsgerätes 1 sind zwei Kopplungsanschlüsse 2a und 2b auf einer ersten Gerätekopplungsseite 3a und zwei weitere Kopplungsanschlüsse 2c und 2d auf einer zweiten Gerätekopplungsseite 3b angeordnet. Die erste Gerätekopplungsseite 3a entspricht dabei einer Oberseite des quaderförmig ausgebildeten Lüftungsgerätes 1, wohingegen die zweite Gerätekopplungsseite 3b auf einer der ersten Gerätekopplungsseite 3a gegenüberliegenden Seite des Lüftungsgerätes 1 angeordnet ist. Demgegenüber sind bei der in Figur 3 gezeigten Bauform des Lüftungsgerätes 1 vier Kopplungsanschlüsse 2a, 2b, 2c und 2d auf einer die Oberseite des Lüftungsgerätes 1 darstellenden Gerätekopplungsseite 3 des Lüftungsgerätes 1 vorgesehen. Folglich entspricht bei der in Figur 3 gezeigten Bauform die einzige Gerätekopplungsseite 3 der Oberseite des Lüftungsgerätes 1. Bei beiden Bauformen weist das jeweilige Lüftungsgerät 1 ein Gerätegehäuse 4 auf, in welchem zum Beispiel zwei Filterelemente 5 (in Figur 1 zeigt der Pfeil für das Bezugszeichen 5 auf einen Deckel, hinter welchem die zwei Filterelemente 5 angeordnet sind) mit einer großen Filterfläche und einem geringen Druckverlust, ein Wärme-Rückgewinner 6 zur Rückgewinnung von Wärme aus einer einen Raum verlassenden Abluft und zwei geräuschminimierte Ventilatoren-Einheiten 7 untergebracht und aufgenommen sind. Alternativ zu dem Wärme-Rückgewinner 6 könnte auch ein Enthalpie-Rückgewinner verwendet werden, um Wärme und Feuchtigkeit aus der Abluft zurückzugewinnen. Die Kopplungsanschlüsse 2a, 2b, 2c und 2d dienen der Führung von verschiedenen Luftarten, wobei von den Luftarten eine Fortluft, eine Abluft, eine Außenluft und eine Zuluft umfasst sind. Dabei ist die Fortluft ein Luftstrom, welcher aus dem Lüftungsgerät 1 ins Freie geführt wird, die Abluft ein Luftstrom, welcher aus einem zu belüftenden Raum kommt und dem Lüftungsgerät 1 zugeführt wird, die Außenluft ein Luftstrom, welcher von außen unbehandelt dem Lüftungsgerät 1 zugeführt wird, und die Zuluft ein Luftstrom, welcher in dem Lüftungsgerät 1 behandelt wurde und in dem zu belüftenden Raum zugeführt wird.

Die Figuren 2 und 4 zeigen für die beiden Bauformen des Lüftungsgerätes 1 verschiedene Gestaltungsmöglichkeiten der Luftführungen, wobei die Luftführungen an dem jeweiligen Lüftungsgerät 1 von erfindungsgemäßen Lüftungsgerät-Luftleitungsbauteilen 8 bestimmt und definiert werden. Wie den Figuren 2 und 4 zu entnehmen ist, ist dabei jedem einzelnen Kopplungsanschluss 2a, 2b, 2c und 2d des Lüftungsgerätes 1 ein einziges Lüftungsgerät-Luftleitungsbauteil 8 zugeordnet, wobei die Lüftungsgerät-Luftleitungsbauteile 8 nach Art eines Baukastensystems angeordnet werden können. Jedes einzelne Lüftungsgerät-Luftleitungsbauteil 8 weist dabei einen Kanal zur Luftführung auf, wobei die Führung der Luft entweder geradlinig durch das Lüftungsgerät-Luftleitungsbauteil 8 hindurch oder in einem Winkel von 90° gekrümmt durch das Lüftungsgerät-Luftleitungsbauteil 8 hindurch erfolgen kann. Denn das erfindungsgemäße Lüftungsgerät-Luftleitungsbauteil 8 ermöglicht beide Arten der Luftführung.

Bei der in Figur 2 gezeigten Bauform des Lüftungsgerätes 1 erfolgt die Luftführung mit Hilfe der Lüftungsgerät-Luftleitungsbauteile 8 für die Kopplungsanschlüsse 2a, 2b, 2c und 2d jeweils gekrümmt unter einem Winkel von 90°, wobei die Führung der Luft für die Kopplungsanschlüsse 2a und 2b an der ersten Gerätekopplungsseite 3a in Bezug auf das Lüftungsgerät 1 jeweils nach vorne gelenkt und geleitet wird, wohingegen die Führung der Luft für die Kopplungsanschlüsse 2c und 2d an der zweiten Gerätekopplungsseite 3b jeweils erst seitlich in Bezug auf das Lüftungsgerät 1 erfolgt, bevor mit zusätzlichen Lüftungsgerät-Luftleitungsbauteilen 8 die Luft jeweils nochmal um 90° umgelenkt und nach oben geleitet wird, wo die Luft über Rohre 9 in Richtung der ersten Gerätekopplungsseite 3a geleitet wird. Aus dem in Figur 2 gezeigten Beispiel wird ersichtlich, dass mit Hilfe eines einzigen Lüftungsgerät-Luftleitungsbauteils 8 die Führung der Luft um 90° umgeleitet werden kann, wobei die Luft dann in drei Richtungen - mit Ausnahme in Richtung des angrenzenden Lüftungsgerät-Luftleitungsbauteils 8 - seitlich umgelenkt werden kann. Berücksichtigt man, dass das Lüftungsgerät-Luftleitungsbauteil 8 auch für eine geradlinige Luftführung geeignet ist, dann kann die Luft mit Hilfe eines an dem Lüftungsgerätes 1 angeschlossenen Lüftungsgerät-Luftleitungsbauteils 8 insgesamt in vier verschiedene Richtungen (eine geradlinige Richtung und drei seitliche Richtungen) umgelenkt werden. Ferner kann mit Hilfe einer Kombination von zwei Lüftungsgerät-Luftleitungsbauteilen 8, welche strömungstechnisch miteinander verbunden sind, wie es in Figur 2 an der zweiten Gerätekopplungsseite 3b gezeigt ist, die Luft um 180° in Rohre 9 umgeleitet und in Richtung der ersten Kopplungsseite 3a umgelenkt werden. Bei dem in Figur 4 gezeigten Beispiel sind die ausschließlich an der oberen Gerätekopplungsseite 3 angeordneten Kopplungsanschlüsse 2a, 2b, 2c und 2d mit insgesamt vier Lüftungsgerät-Luftleitungsbauteilen 8 strömungstechnisch verbunden, wobei auch hier jedem einzelnen Kopplungsanschluss 2a, 2b, 2c und 2d ein einziges Lüftungsgerät-Luftleitungsbauteil 8 zugeordnet ist, welches jeweils die durch das Lüftungsgerät-Luftleitungsbauteil 8 hindurchströmende Luft um 90° umlenkt. Bei den in den Figuren 2 und 4 gezeigten Beispielen bildet das jeweilige Lüftungsgerät 1 und die Lüftungsgerät-Luftleitungsbauteile 8 ein Raumlüftungssystem 10 aus.

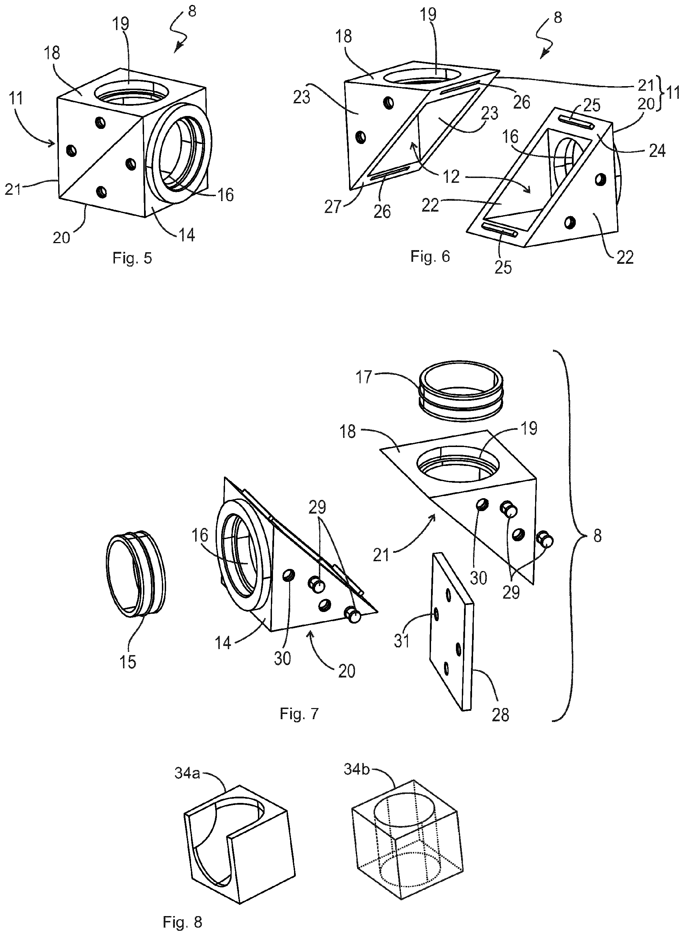

In den übrigen Figuren 5 bis 11b ist das erfindungsgemäße Lüftungsgerät-Luftleitungsbauteil 8 in verschiedenen Ansichten gezeigt. Die Figur 5 zeigt eine perspektivische Draufsicht auf das Lüftungsgerät-Luftleitungsbauteil 8, wohingegen in Figur 6 eine perspektivische Einzelteildarstellung gezeigt ist. Das Lüftungsgerät-Luftleitungsbauteil 8 weist einen Grundkörper 11 mit einer Vielzahl von Seitenflächen auf. In dem dargestellten Ausführungsbeispiel weist der Grundkörper 11 insgesamt 6 Seitenflächen auf, welche einen Innenraum 12 des Grundkörpers 11 begrenzen, wie es sich aus der Darstellung der Figur 6 erschließt. Der Grundkörper 11 sollte dabei allgemein die Form eines extrudierten Vierecks oder die Form eines Quaders aufweisen, um die durch die Erfindung gegebene Flexibilität hinsichtlich der Führung der Luft realisieren zu können und um gleichzeitig ein Minimum an Einbauraum in Anspruch zu nehmen. Dabei bietet die viereckige oder quaderförmige Form die Möglichkeit, dass die Lüftungsgerät-Luftleitungsbauteile 8 bündig mit dem Gerätegehäuse 4 des Lüftungsgerätes 1 abschließen und optisch den Eindruck einer einzigen Baueinheit vermitteln.

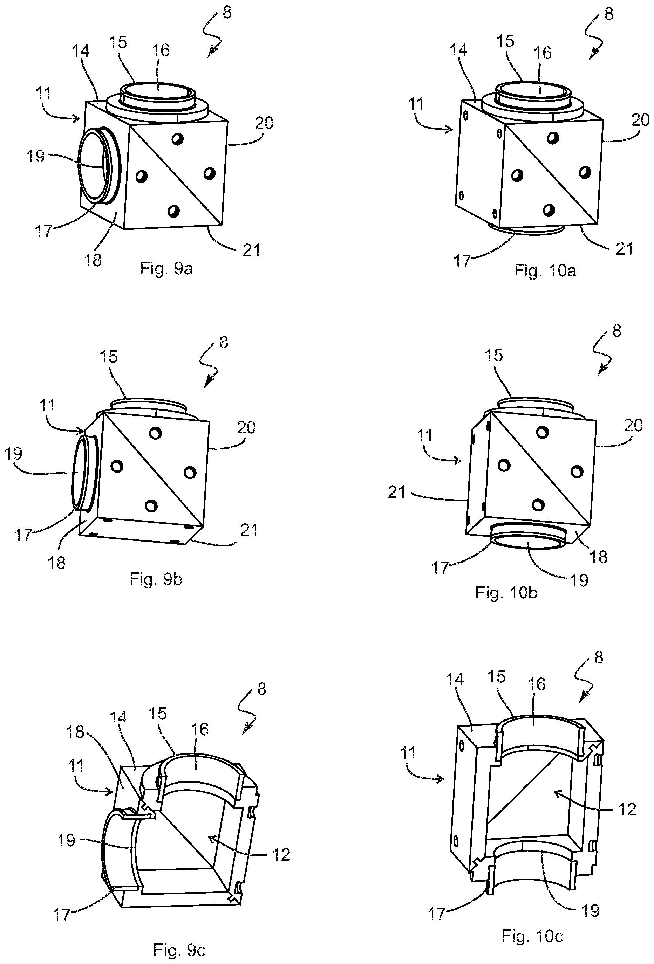

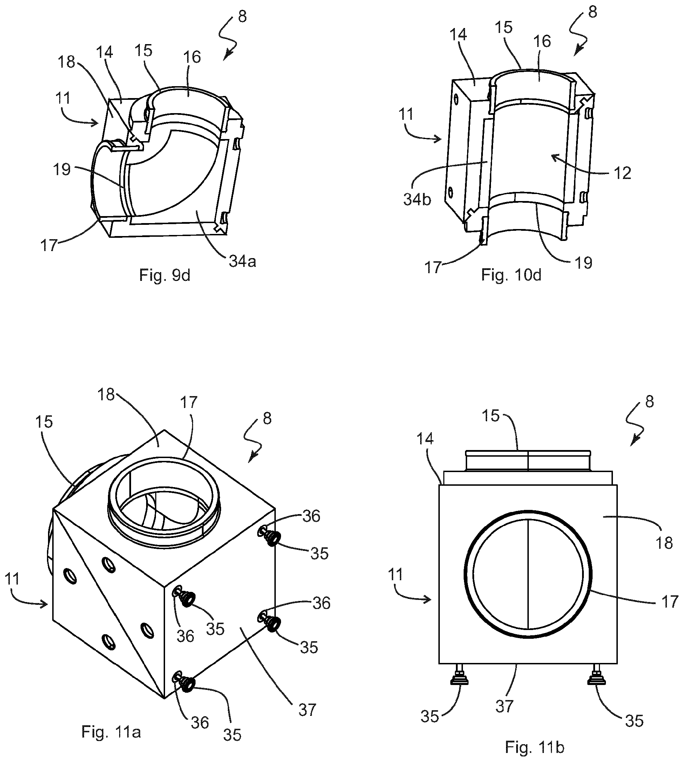

Auf einer ersten Seitenfläche 14 des Grundkörpers 11 ist ein Lüftungsgerät-Geräteanschluss 15 und eine Geräteanschlussöffnung 16 ausgebildet. Der Lüftungsgerät-Geräteanschluss 15 bzw. die Geräteanschlussöffnung 16 dient zur Verbindung mit einem der Kopplungsanschlüsse 2a, 2b, 2c, 2d des Lüftungsgeräts 1, so dass ein Kopplungsanschluss 2a, 2b, 2c, 2d mit der Geräteanschlussöffnung 16 des Lüftungsgerät-Luftleitungsbauteils 8 strömungsverbunden ist und Luft durch das Lüftungsgerät-Luftleitungsbauteil 8 hindurch entweder zu dem Lüftungsgerät 1 hin oder von dem Lüftungsgerät 1 weg geleitet werden kann. Dabei strömt Luft von der Geräteanschlussöffnung 16 durch den Innenraum 12 des Grundkörpers 11 zu einem an dem Grundkörper 11 ausgebildeten Anschluss 17 über eine an dem Grundkörper 11 ausgebildete Anschlussöffnung 19. Dieser Anschluss 17 und diese Anschlussöffnung 19 sind auf einer zweiten Seitenfläche 18 des Grundkörpers 11 ausgebildet. Die Geräteanschlussöffnung 15 ist über den Innenraum 12 mit der Anschlussöffnung 19 strömungsverbunden. Das besondere an der Erfindung ist, dass die zweite Seitenfläche 18 relativ zu der ersten Seitenfläche 14 anordenbar ausgebildet ist. Dies ist dadurch möglich, weil der Grundkörper 11 einen ersten Teilkörper 20, an welchem die Geräteanschlussöffnung 15 ausgebildet ist, und einen zweiten Teilkörper 21, an welchem die Anschlussöffnung 19 ausgebildet ist, aufweist, wie es in Figur 6 gezeigt ist. Dabei ist der zweite Teilkörper 21 entweder in einer ersten Befestigungsposition (siehe Figuren 9a, 9b, 9c, 9d), in welcher die zweite Seitenfläche 18 an die erste Seitenfläche 14 angrenzend angeordnet ist, oder in einer zweiten Befestigungsposition (siehe Figuren 10a, 10b, 10c), in welcher die zweite Seitenfläche 18 der ersten Seitenfläche 14 gegenüberliegend angeordnet ist, mit dem ersten Teilkörper 20 lösbar verbunden.

Im Sinne der Erfindung ist dabei mit einer "angrenzenden" Anordnung von erster Seitenfläche 14 zu zweiter Seitenfläche 18 eine Anordnung gemeint, bei welcher die Geräteanschlussöffnung 16 und die Anschlussöffnung 19 unter einem Winkel von nahezu 90° zueinander angeordnet sind, so dass die durch das Lüftungsgerät-Luftleitungsbauteil 8 geführte Luft in einem Bogen von 90° umgelenkt wird, was charakteristisch für die erste Befestigungsposition ist. Ferner ist im Sinne der Erfindung mit einer "gegenüberliegenden" Anordnung eine Anordnung zu verstehen, bei welcher die Geräteanschlussöffnung 16 und die Anschlussöffnung 19 unter einem Winkel von nahezu 180° zueinander angeordnet sind, so dass die durch das Lüftungsgerät-Luftleitungsbauteil 8 geführte Luft geradlinig durch den Grundkörper 11 strömt, was charakteristisch für die zweite Befestigungsposition ist.

Eine Anordnung der beiden Teilkörper 20 und 21 in zwei verschiedenen Positionen (erste und zweite Befestigungsposition) zueinander, bei welchen sich die Anordnung der Geräteanschlussöffnung 16 und der Anschlussöffnung 19 zueinander ändert, ist dadurch möglich, weil der erste Teilkörper 20 und der zweite Teilkörper 21 jeweils mit zwei dreieckförmigen und parallel zueinander verlaufenden Teilseitenflächen 22 und 23 ausgebildet sind.

Verbunden werden der erste Teilkörper 20 und der zweite Teilkörper 21 mit Hilfe einer einfachen und symmetrisch ausgebildeten Steckverbindung. Von einem an dem zweiten Teilkörper 21 anliegenden Rand 24 des ersten Teilkörpers 20 stehen Verbindungsstege 25 hervor. Diese Verbindungsstege 25 stehen mit Verbindungsaufnahme 26 in der ersten und zweiten Befestigungsposition in Eingriff, wobei die Verbindungsaufnahmen 26 an einem an dem ersten Teilkörper 20 anliegenden Rand 27 des zweiten Teilkörpers 21 ausgebildet sind. Mittels der ineinandergreifenden Verbindungsstege 25 und Verbindungsaufnahmen 26 ist der erste Teilkörper 20 mit dem zweiten Teilkörper 21 verbunden und vordefiniert positioniert.

In Figur 7 ist das erfindungsgemäße Lüftungsgerät-Luftleitungsbauteil 8 in einer Einzelteildarstellung gezeigt. Auf Figur 7 ist eine Abdeckplatte 28 ersichtlich, welche an dem Grundkörper 11 lösbar befestigt wird. Als Ort der Befestigung dient dabei eine Seitenfläche des Grundkörpers 11, welche an die die Geräteanschlussöffnung 16 aufweisende erste Seitenfläche 14 angrenzt. Mit Hilfe der Abdeckplatte 23 kann beispielsweise eine fluchtende Fläche zu dem Gerätegehäuse 4 des Lüftungsgerätes 1 ausgebildet werden, was die optische Erscheinung des aus mehreren Lüftungsgerät-Luftleitungsbauteilen 8 und dem Lüftungsgerät 1 bestehenden Raumlüftungssystems 10 verbessert. Andererseits kann die Abdeckplatte 28 auch dazu dienen, den ersten Teilkörper 20 und den zweiten Teilkörper 21 noch sicherer miteinander zu verbinden. Die lösbare Verbindung zwischen dem Grundkörper 11 und der Abdeckplatte 28 wird dabei von Verbindungsbolzen 29 realisiert, welche in Aufnahmeausnehmungen 30 in dem Grundkörper 11 und in Ausnehmungen 31 in der Abdeckplatte 23 (siehe zum Beispiel Figur 7) eingesteckt und dort lösbar befestigt sind. Solche Aufnahmeausnehmungen 30 sind an mindestens einer Seitenfläche des Grundkörpers 11, welche an die die Geräteanschlussöffnung 16 aufweisende erste Seitenfläche 14 angrenzt, vorhanden. Dabei dienen die in die Aufnahmeausnehmungen 25 des Grundkörpers 11 eingesteckten Verbindungsbolzen 29 nicht nur dazu, um eine Abdeckplatte 28 fixieren zu können. Vielmehr können mit Hilfe der Verbindungsbolzen 29 auch zwei nebeneinander liegend angeordnete Lüftungsgerät-Luftleitungsbauteile 8 miteinander verbunden werden, wie es in den Figuren 2 und 4 gezeigt ist, was die Stabilität der Anordnung erhöht. Wie ferner der Figur 2 zu entnehmen ist, können die unterhalb des Lüftungsgerätes 1 angeordneten Lüftungsgerät-Luftleitungsbauteile 8 ferner als ein Sockel 32 dienen, auf welchem das Lüftungsgerät 1 steht. Von Vorteil ist es dabei, wenn bei einem als Sockel 32 dienenden Lüftungsgerät-Luftleitungsbauteil 8 an der zweiten Seitenfläche 19 mehrere Standfüße lösbar befestigt sind. Eine solche Ausführung ist in den Figuren 11a und 11b gezeigt, wo insgesamt vier Standfüße 35 auf einer Seitenfläche 37 des Grundkörpers 11 angebracht sind. Dabei liegt die Seitenfläche 37 der Seitenfläche 14, an welcher die Geräteanschlussöffnung 16 angeordnet ist, gegenüber. Bei der in den Figuren 11a und 11b gezeigten Ausführung sind die Standfüße 35 an dem Lüftungsgerät-Luftleitungsbauteil 8 lösbar befestigt, wobei für die lösbare Verbindung entsprechende Einlegeteile 36 vorgesehen sind, die in das Material der zweiten Seitenfläche 19 des Lüftungsgerät-Luftleitungsbauteils 8 eingeschweißt sind. Die Einlegeteile 36 sind dabei als Gewindeelemente ausgebildet, so dass die Standfüße 35 in die jeweiligen Einlegeteile 36 eingeschraubt sind. Alternativ ist es auch denkbar, dass anstelle der lösbaren Verbindung eine Verbindung vorgesehen sein kann, bei welcher die Standfüße 35 nicht ohne Beschädigung des Lüftungsgerät-Luftleitungsbauteils 8 von der zweiten Seitenfläche 19 entfernt werden können. Es ist ersichtlich, dass eine Ausgestaltung mit Standfüßen 35 nur dann in Betracht kommt, wenn die Luft innerhalb des Lüftungsgerät-Bauteils 8 um 90° umgelenkt wird.

Der Lüftungsgerät-Geräteanschluss 15 eines Lüftungsgerät-Luftleitungsbauteils 8 ist in jedem Fall immer mit einem der Kopplungsanschlüsse 2a, 2b, 2c, 2d des Lüftungsgerätes 1 strömungsverbunden, wie es aus den Figuren 2 und 4 hervorgeht, wobei ein Lüftungsgerät-Geräteanschluss 15 des Lüftungsgerät-Luftleitungsbauteils 8 und ein zugeordneter Kopplungsanschluss 2a, 2b, 2c oder 2d des Lüftungsgerätes 1 zusammensteckbar ausgebildet sind. Wie die Führung der Luft zu dem Lüftungsgerät 1 hin oder von dem Lüftungsgerät 1 weg erfolgen soll, ist dabei sehr flexibel gestaltbar, wie die Figuren 2 und 4 zeigen. Für die Luftführung ist daher bei der Installation am Einbauort oder bei der werksseitigen Serienfertigung zu entscheiden, ob die Luft durch den Grundkörper 11 um 90° umgelenkt werden soll oder ob die Luft geradlinig durch den Grundkörper 11 strömen soll. Ist die Entscheidung hierzu getroffen, so wird der zweite Teilkörper 21 entweder in seiner ersten Befestigungsposition (siehe Figuren 9a, 9b, 9c, 9d) oder in seiner zweiten Befestigungsposition (siehe Figuren 10a, 10b, 10c) an dem ersten Teilkörper 20 befestigt. Wenn die Luft innerhalb des Lüftungsgerät-Luftleitungsbauteils 8 um 90° umgelenkt wird, dann kann die Anschlussöffnung 19 des Lüftungsgerät-Luftleitungsbauteils 8 in verschiedene Richtungen weisen, da das Lüftungsgerät-Luftleitungsbauteils 8 um eine Achse 33 (siehe Figuren 1 und 3), die durch den mit dem Lüftungsgerät 1 verbundenen Kopplungsanschluss 2a, 2b, 2c, 2d verläuft, relativ verdrehbar ausgebildet ist, wie es auch die Figuren 2 und 4 zeigen.

Der Innenraum 12 des Grundkörpers 11 kann optional mit einem Schalldämmungs-Element 34a oder 34b ausgestattet sein, wie es in den Figuren 8, 9d und 10d gezeigt ist. In der Figur 8 sind Schalldämmungs-Elemente 34a und 34b gezeigt, wobei das dargestellte Schalldämmungs-Element 34a einen Kanal für eine Umlenkung um 90° der durch den Grundkörper 11 strömenden Luft ausbildet (siehe auch Figur 9d), wohingegen das Schalldämmungs-Element 34b einen Kanal für eine geradlinige Luftführung durch den Grundkörper 11 ausbildet. Der jeweilige Kanal der Schalldämmungs-Elemente 34a und 34b kann jeweils mit einer Verhautung versehen sein, um das Schalldämmungs-Element 34a oder 34b, welches die Geräteanschlussöffnung 16 mit der Anschlussöffnung 19 strömungsverbindet, zu schützen.

In den gezeigten Beispielen der Figuren 9a bis 9d und 10a bis 10d sind die Kantenlängen der Lüftungsgerät-Luftleitungsbauteile 8 gleich lang, so dass ein in sich zusammensteckbares System aus Lüftungsgerät-Luftleitungsbauteilen 8 entsteht, welches im Idealfall mit den Außenabmessungen des Lüftungsgerätes 1 zusammenpasst.

Der Grundkörper 11 besteht in dem gezeigten Ausführungsbeispiel aus einem dampfdiffusionsdichten und/oder wärmeisolierenden Werkstoff, wobei dieser Werkstoff zum Beispiel ein thermoplastischer Kunststoff sein kann. Dabei ist es ferner denkbar, dass der Grundkörper 11 aus einem expandierten Polypropylen (EPP) gebildet ist.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird.

## Patentansprüche

1. Lüftungsgerät-Luftleitungsbauteil (8), aufweisend einen Grundkörper (11) mit einer Vielzahl von Seitenflächen, welche einen Innenraum (12) des Grundkörpers (11) begrenzen,
wobei auf einer ersten Seitenfläche (14) des Grundkörpers (11) eine Geräteanschlussöffnung (16) ausgebildet ist,
wobei auf einer zweiten Seitenfläche (18) des Grundkörpers (11) eine Anschlussöffnung (19) ausgebildet ist,
wobei die Geräteanschlussöffnung (15) über den Innenraum (12) mit der Anschlussöffnung (19) strömungsverbunden ist,
wobei der Grundkörper (11) einen ersten Teilkörper (20), an welchem die Geräteanschlussöffnung (15) ausgebildet ist, und einen zweiten Teilkörper (21), an welchem die Anschlussöffnung (19) ausgebildet ist, aufweist, und
wobei der zweite Teilkörper (21) entweder in einer ersten Befestigungsposition, in welcher die zweite Seitenfläche (18) an die erste Seitenfläche (14) angrenzend angeordnet ist, oder in einer zweiten Befestigungsposition, in welcher die zweite Seitenfläche (18) der ersten Seitenfläche (14) gegenüberliegend angeordnet ist, mit dem ersten Teilkörper (20) verbunden ist.

2. Lüftungsgerät-Luftleitungsbauteil (8) nach Anspruch 1, wobei der Grundkörper (11) die Form eines extrudierten Vierecks aufweist.

3. Lüftungsgerät-Luftleitungsbauteil (8) nach Anspruch 1 oder 2, wobei der Grundkörper (11) die Form eines Quaders aufweist.

4. Lüftungsgerät-Luftleitungsbauteil (8) nach einem der vorhergehenden Ansprüche, wobei in der ersten Befestigungsposition die Geräteanschlussöffnung (16) und die Anschlussöffnung (19) unter einem Winkel von 90° zueinander angeordnet sind.

5. Lüftungsgerät-Luftleitungsbauteil (8) nach einem der vorhergehenden Ansprüche, wobei der erste Teilkörper (20) und der zweite Teilkörper (21) jeweils mit zwei dreieckförmigen und parallel zueinander verlaufenden Teilseitenflächen (22, 23) ausgebildet sind.

6. Lüftungsgerät-Luftleitungsbauteil (8) nach einem der vorhergehenden Ansprüche, wobei in der zweiten Befestigungsposition die Geräteanschlussöffnung (16) und die Anschlussöffnung (19) unter einem Winkel von 180° zueinander angeordnet sind.

7. Lüftungsgerät-Luftleitungsbauteil (8) nach einem der vorhergehenden Ansprüche, wobei von einem an dem zweiten Teilkörper (21) anliegenden Rand (24) des ersten Teilkörpers (20) wenigstens ein Verbindungssteg (25) hervorsteht, welcher mit wenigstens einer Verbindungsaufnahme (26) in der ersten und zweiten Befestigungsposition in Eingriff steht und den ersten Teilkörper (20) mit dem zweiten Teilkörper (21) verbindet, wobei die wenigstens eine Verbindungsaufnahme (26) an einem an dem ersten Teilkörper (20) anliegenden Rand (27) des zweiten Teilkörpers (21) ausgebildet ist.

8. Lüftungsgerät-Luftleitungsbauteil (8) nach einem der vorhergehenden Ansprüche, wobei ein die Geräteanschlussöffnung (16) mit der Anschlussöffnung (19) strömungsverbindend ausgebildetes Schalldämmungs-Element (34a, 34b) innerhalb des Innenraumes (12) des Grundkörpers (11) eingesetzt angeordnet ist.

9. Lüftungsgerät-Luftleitungsbauteil (8) nach einem der vorhergehenden Ansprüche, wobei an mindestens einer Seitenfläche des Grundkörpers (11), welche an die die Geräteanschlussöffnung (16) aufweisende erste Seitenfläche (14) angrenzt, mindestens eine zur lösbaren Verbindung mit einem Verbindungsbolzen (29) ausgebildete Aufnahmeausnehmung (30) ausgebildet ist.

10. Lüftungsgerät-Luftleitungsbauteil (8) nach einem der vorhergehenden Ansprüche, wobei an einer Seitenfläche des Grundkörpers (11), welche der Geräteanschlussöffnung (16) gegenüberliegt, mehrere Standfüße (35) befestigt sind.

11. Lüftungsgerät-Luftleitungsbauteil (8) nach Anspruch 10, wobei ein jeweiliger Standfuß (35) über ein in der Seitenfläche (37) des Grundkörpers (11), welche der Seitenfläche (14) der Geräteanschlussöffnung (16) gegenüberliegt, eingeschweißtes Einlegeteil (36) an der Seitenfläche (37) lösbar befestigt ist.

12. Lüftungsgerät-Luftleitungsbauteil (8) nach einem der vorhergehenden Ansprüche, **dadurch gekennzeichnet, dass** der Grundkörper (11) aus einem dampfdiffusionsdichten und/oder wärmeisolierenden Werkstoff besteht.

13. Lüftungsgerät-Luftleitungsbauteil (8) nach einem der vorhergehenden Ansprüche, **dadurch gekennzeichnet, dass** der Grundkörper (11) aus einem thermoplastischen Kunststoff besteht.

14. Raumlüftungssystem (10) mit einem Lüftungsgerät (1) und wenigstens zwei Lüftungsgerät-Luftleitungsbauteilen (8) nach Anspruch 1, wobei das Lüftungsgerät (1) ein Gerätegehäuse (4) aufweist, in welchem wenigstens ein Filterelement (5), wenigstens ein Wärme-Rückgewinner (6) und wenigstens eine Ventilatoren-Einheit (7) untergebracht sind, wobei das Gerätegehäuse (4) wenigstens eine Gerätekopplungsseite (3; 3a, 3b) mit wenigstens zwei Kopplungsanschlüssen (2a, 2b, 2c, 2d) aufweist, und wobei ein jeweiliger Kopplungsanschluss (2a, 2b, 2c, 2d) mit der Geräteanschlussöffnung (16) strömungsverbunden ist.

15. Raumlüftungssystem (10) nach Anspruch 14, wobei ein jeweiliges Lüftungsgerät-Luftleitungsbauteil (8) um eine Achse (33), die durch den mit dem Lüftungsgerät (1) verbundenen Kopplungsanschluss (2a, 2b, 2c, 2d) verläuft, relativ verdrehbar ausgebildet ist.

16. Raumlüftungssystem (10) nach Anspruch 14 oder 15, wobei die Geräteanschlussöffnung (16) des Lüftungsgerät-Luftleitungsbauteils (8) und ein zugeordneter Kopplungsanschluss (2a, 2b, 2c, 2d) des Lüftungsgerätes (1) zusammensteckbar ausgebildet sind.

17. Raumlüftungssystem (10) nach einem der Ansprüche 14 bis 16, wobei an einer Seitenfläche des Grundkörpers (11), welche der Geräteanschlussöffnung (16) gegenüberliegt, mehrere Standfüße befestigt sind und die wenigstens zwei Lüftungsgerät-Luftleitungsbauteile (8) als das Lüftungsgerät (1) abstützende Sockel (32) ausgebildet sind.

18. Raumlüftungssystem (10) nach Anspruch 17, wobei ein jeweiliger Standfuß (35) über ein in der Seitenfläche des Grundkörpers (11), welche der Seitenfläche der Geräteanschlussöffnung (16) gegenüberliegt, eingeschweißtes Einlegeteil (36) an der zweiten Seitenfläche (19) lösbar befestigt ist.

## Claims

1. A ventilation unit air line component (8), comprising a base body (11) with a plurality of lateral surfaces that delimit an interior (12) of the base body (11),
wherein a device connection opening (16) is formed on a first lateral surface (14) of the base body (11),
wherein a connection opening (19) is formed on a second lateral surface (18) of the base body (11),
wherein the device connection opening (15) is fluidically connected to the connection opening (19) via the interior (12),
wherein the base body (11) has a first partial body (20), on which the device connection opening (15) is formed, and a second partial body (21), on which the connection opening (19) is formed, and
wherein the second partial body (21) is connected to the first partial body (20) either in a first fastening position, in which the second lateral surface (18) is arranged adjacent to the first lateral surface (14), or in a second fastening position, in which the second lateral surface (18) is arranged opposite of the first lateral surface (14).

2. The ventilation unit air line component (8) according to claim 1, wherein the base body (11) has the shape of an extruded quadrangle.

3. The ventilation unit air line component (8) according to claim 1 or 2, wherein the base body (11) has the shape of a cuboid.

4. The ventilation unit air line component (8) according to one of the preceding claims, wherein the device connection opening (16) and the connection opening (19) are arranged at an angle of 90° to one another in the first fastening position.

5. The ventilation unit air line component (8) according to one of the preceding claims, wherein the first partial body (20) and the second partial body (21) are respectively realized with two triangular partial lateral surfaces (22, 23) that extend parallel to one another.

6. The ventilation unit air line component (8) according to one of the preceding claims, wherein the device connection opening (16) and the connection opening (19) are arranged at an angle of 180° to one another in the second fastening position.

7. The ventilation unit air line component (8) according to one of the preceding claims, wherein at least one connection web (25) protrudes from an edge (24) of the first partial body (20) abutting on the second partial body (21), wherein said connection web is engaged with at least one connection receptacle (26) in the first and the second fastening position and connects the first partial body (20) to the second partial body (21), and wherein the at least one connection receptacle (26) is formed on an edge (27) of the second partial body (21) abutting on the first partial body (20).

8. The ventilation unit air line component (8) according to one of the preceding claims, wherein a sound insulation element (34a, 34b) designed for fluidically connecting the device connection opening (16) to the connection opening (19) is arranged within the interior (12) of the base body (11).

9. The ventilation unit air line component (8) according to one of the preceding claims, wherein at least one receptacle recess (30) designed for being separably connected to a connecting bolt (29) is formed on at least one lateral surface of the base body (11), which borders on the first lateral surface (14) having the device connection opening (16).

10. The ventilation unit air line component (8) according to one of the preceding claims, wherein multiple legs (35) are fastened on a lateral surface of the base body (11) lying opposite of the device connection opening (16).

11. The ventilation unit air line component (8) according to claim 10, wherein a respective leg (35) is separably fastened on the lateral surface (37) by means of an insert part (36), which is welded into the lateral surface (37) of the base body (11) lying opposite of the lateral surface (14) with the device connection opening (16).

12. The ventilation unit air line component (8) according to one of the preceding claims, **characterized in that** the base body (11) consists of a vapor diffusion-tight and/or heat-insulating material.

13. The ventilation unit air line component (8) according to one of the preceding claims, **characterized in that** the base body (11) consists of a thermoplastic polymer.

14. A room ventilation system (10) with a ventilation unit (1) and at least two ventilation unit air line components (8) according to claim 1, wherein the ventilation unit (1) has a unit housing (4), in which at least one filter element (5), at least one heat recuperator (6) and at least one fan unit (7) are accommodated, wherein the unit housing (4) has at least one device coupling side (3; 3a, 3b) with at least two coupling connections (2a, 2b, 2c, 2d), and wherein a respective coupling connection (2a, 2b, 2c, 2d) is fluidically connected to the device connection opening (16).

15. The room ventilation system (10) according to claim 14, wherein a respective ventilation unit air line component (8) is designed so as to be relatively rotatable about an axis (33) extending through the coupling connection (2a, 2b, 2c, 2d) connected to the ventilation unit (1).

16. The room ventilation system (10) according to claim 14 or 15, wherein the device connection opening (16) of the ventilation unit air line component (8) and an associated coupling connection (2a, 2b, 2c, 2d) of the ventilation unit (1) are designed so as to be intermateable.

17. The room ventilation system (10) according to one of claims 14 to 16, wherein multiple legs are fastened on a lateral surface of the base body (11) lying opposite of the device connection opening (16), and wherein the at least two ventilation unit air line components (8) are realized in the form of pedestals (32) supporting the ventilation unit (1).

18. The room ventilation system (10) according to claim 17, wherein a respective leg (35) is separably fastened on the second lateral surface (19) by means of an insert part (36), which is welded into the lateral surface of the base body (11) lying opposite of the lateral surface with the device connection opening (16).

## Revendications

1. Composant de conduit d'air d'un appareil de ventilation (8), comportant un corps de base (11) pourvu d'une pluralité de surfaces latérales, lesquelles délimitent un espace intérieur (12) du corps de base (11),
sur une première surface latérale (14) du corps de base (11) étant conçu un orifice de raccordement (16) sur l'appareil,
sur une deuxième surface latérale (18) du corps de base (11) étant conçu un orifice de raccordement (19),
l'orifice de raccordement (15) sur l'appareil étant en liaison d'écoulement avec l'orifice de raccordement (19) par l'intermédiaire de l'espace intérieur (12),
le corps de base (11) comportant un premier corps partiel (20), sur lequel est conçu l'orifice de raccordement (15) sur l'appareil et un deuxième corps partiel (21), sur lequel est conçu l'orifice de raccordement (19) et
le deuxième corps partiel (21) étant relié avec le premier corps partiel (20), soit dans une première position de fixation, dans laquelle la deuxième surface latérale (18) est placée en étant adjacente à la première surface latérale (14), ou dans une deuxième position de fixation, dans laquelle la deuxième surface latérale (18) est placée au vis-à-vis de la première surface latérale (14).

2. Composant de conduit d'air d'un appareil de ventilation (8) selon la revendication 1, le corps de base (11) présentant la forme d'un carré extrudé.

3. Composant de conduit d'air d'un appareil de ventilation (8) selon la revendication 1 ou 2, le corps de base (11) présentant la forme d'un parallélépipède.

4. Composant de conduit d'air d'un appareil de ventilation (8) selon l'une quelconque des revendications précédentes, dans la première position de fixation, l'orifice de raccordement (16) sur l'appareil et l'orifice de raccordement (19) étant placés sous un angle mutuel de 90°.

5. Composant de conduit d'air d'un appareil de ventilation (8) selon l'une quelconque des revendications précédentes, le premier corps partiel (20) et le deuxième corps partiel (21) étant conçus chacun avec deux surfaces latérales partielles (22, 23) de forme triangulaire et s'écoulant à la parallèle l'une de l'autre.

6. Composant de conduit d'air d'un appareil de ventilation (8) selon l'une quelconque des revendications précédentes, dans la deuxième position de fixation, l'orifice de raccordement (16) sur l'appareil et l'orifice de raccordement (19) étant placés sous un angle mutuel de 180°.

7. Composant de conduit d'air d'un appareil de ventilation (8) selon l'une quelconque des revendications précédentes, à partir d'un bord (24) du premier corps partiel (20) qui est adjacent au deuxième corps partiel (21) débordant au moins une barrette de liaison (25), laquelle se trouve en engagement avec au moins un logement de liaison (26) dans la première et la deuxième position de fixation et relie le premier corps partiel (20) avec le deuxième corps partiel (21), l'au moins un logement de liaison (26) étant conçu sur un bord (27) du deuxième corps partiel (21) qui est adjacent au premier corps partiel (20).

8. Composant de conduit d'air d'un appareil de ventilation (8) selon l'une quelconque des revendications précédentes, un élément d'insonorisation (34a, 34b) conçu pour créer une liaison d'écoulement entre l'orifice de raccordement (16) sur l'appareil et l'orifice de raccordement (19) étant conçu en étant inséré à l'intérieur de l'espace intérieur (12) du corps de base (11).

9. Composant de conduit d'air d'un appareil de ventilation (8) selon l'une quelconque des revendications précédentes, sur au moins une surface latérale du corps de base (11), laquelle est adjacente à la première surface latérale (14) qui comporte l'orifice de raccordement (16) sur l'appareil étant conçu au moins un évidement de logement (30) conçu pour la liaison amovible avec un boulon de liaison (29) .

10. Composant de conduit d'air d'un appareil de ventilation (8) selon l'une quelconque des revendications précédentes, sur une surface latérale du corps de base (11), laquelle se trouve au vis-à-vis de l'orifice de raccordement (16) sur l'appareil étant fixés plusieurs pieds de support (35).

11. Composant de conduit d'air d'un appareil de ventilation (8) selon la revendication 10, un pied de support (35) respectif étant fixé de manière amovible sur la surface latérale (37) par l'intermédiaire d'une pièce d'insertion (36) soudée dans la surface latérale (37) du corps de base (11), laquelle se trouve au vis-à-vis de la surface latérale (14) de l'orifice de raccordement (16) sur l'appareil.

12. Composant de conduit d'air d'un appareil de ventilation (8) selon l'une quelconque des revendications précédentes, **caractérisé en ce que** le corps de base (11) est constitué d'une matière étanche à la diffusion de vapeur et / ou isolante thermique.

13. Composant de conduit d'air d'un appareil de ventilation (8) selon l'une quelconque des revendications précédentes, **caractérisé en ce que** le corps de base (11) est constitué d'une matière thermoplastique.

14. Système de ventilation d'une pièce (10) pourvu d'un appareil de ventilation (1) et d'au moins deux composants de conduit d'air d'un appareil de ventilation (8) selon la revendication 1, l'appareil de ventilation (1) comportant un carter (4) d'appareil dans lequel sont logés au moins un élément filtrant (5), au moins un récupérateur de chaleur (6) et au moins une unité de ventilation (7), le carter (4) d'appareil comportant au moins un côté d'accouplement (3; 3a, 3b) de l'appareil, pourvu d'au moins deux raccords d'accouplement (2a, 2b, 2c, 2d) et un raccord d'accouplement (2a, 2b, 2c, 2d) respectif se trouvant en liaison d'écoulement avec l'orifice de raccordement (16) sur l'appareil.

15. Système de ventilation d'une pièce (10) selon la revendication 14, un composant de conduit d'air d'un appareil de ventilation (8) respectif étant conçu en étant rotatif relativement autour d'un axe (33) qui s'écoule à travers le raccord d'accouplement (2a, 2b, 2c, 2d) relié avec l'appareil de ventilation (1).

16. Système de ventilation d'une pièce (10) selon la revendication 14 ou 15, l'orifice de raccordement (16) sur le composant de conduit d'air d'un appareil de ventilation (8) et un raccord d'accouplement (2a, 2b, 2c, 2d) associé de l'appareil de ventilation (1) étant conçus en étant emboîtables.

17. Système de ventilation d'une pièce (10) selon l'une quelconque des revendications 14 à 16, sur une surface latérale du corps de base (11), laquelle est placée au vis-à-vis de l'orifice de raccordement (16) sur l'appareil étant fixés plusieurs pieds de support et les au moins deux composants de conduit d'air d'un appareil de ventilation (8) étant conçus sous la forme d'un socle (32) soutenant l'appareil de ventilation (1) .

18. Système de ventilation d'une pièce (10) selon la revendication 17, un pied de support (35) respectif étant fixé de manière amovible sur la deuxième surface latérale (19) par l'intermédiaire d'une pièce d'insertion (36) soudée dans la surface latérale du corps de base (11), laquelle se trouve au vis-à-vis de la surface latérale de l'orifice de raccordement (16) sur l'appareil.
